# NEUE EUROPÄISCHE PATENTSCHRIFT

(11) **EP 2 252 139 B2**
(45) Veröffentlichungstag und Bekanntmachung des Hinweises auf die Entscheidung über den Einspruch: **25.12.2019**
(45) Hinweis auf die Patenterteilung: 05.09.2012
(21) Anmeldenummer: 09761318.6
(22) Anmeldetag: 06.06.2009
(51) Int. Cl.: A01G 23/06, E02F 5/32

(54) **RODUNGSMESSER**
CLEARING BLADE
LAME DE DÉFRICHAGE

(30) Priorität: 10.06.2008 DE 102008027549
(43) Veröffentlichungstag der Anmeldung: 24.11.2010
(73) Patentinhaber: Neidlein, Hartmut, 71384 Weinstadt (DE)
(72) Erfinder: Neidlein, Hartmut, 71384 Weinstadt (DE)
(74) Vertreter: Wimmer, Stephan
(86) Internationale Anmeldenummer: PCT/DE2009/000792
(87) Internationale Veröffentlichungsnummer: WO 2009/149696

(56) Entgegenhaltungen:
- EP-A- 0 161 169
- EP-A- 0 314 591
- EP-A- 1 921 212
- EP-A1- 0 314 591
- AT-B- E30 366
- US-A- 2 934 108
- US-A- 2 934 108
- US-A- 5 490 340
- US-A1- 2006 156 590
- US-A1- 2006 248 754
- US-A1- 2006 248 754
- "Katalog Soerma TP. Hydrolic Global Solutions", , 1 April 2004 (2004-04-01), page 1,29,

## Beschreibung

Werden Bäume gefällt, müssen insbesondere in Parkanlagen und im innerstädtischen Bereich Stumpf und Wurzeln - nachfolgend: Wurzelstock - entfernt werden. Einmal um die Planierung und Wiederbepflanzung der Oberfläche zu ermöglichen. Dann in den Fällen, in denen am selben Ort wieder ein Baum gepflanzt werden soll. Wurzeln, die im Pflanzbereich verbleiben, wirken sich biologisch ungünstig auf das Wachstum der neuen Bäume aus.

Nach dem Stand der Technik werden Wurzelstöcke weggefräst. Dazu werden Wurzelstockfräsen eingesetzt, die eine Reihe von Nachteilen haben: Die Frästiefe ist durch den Radius der Frästrommeln begrenzt. Der Aushub ist ein Gemisch aus Erde und Holzsplittern. Wurzelstockfräsen sind teuer.

Eine andere Lösung nach dem Stand der Technik wird in DP 936 605 und in EP 1 921 212 vorgeschlagen. Es ist ein "Rodehaken" bzw. "Rodezahn", der nach dem Stand der Technik in der Regel als "Reißzahn" bezeichnet wird. Dieser "Reißzahn" ist am Ende eines Baggerarms befestigt. Er wird mittels des Baggerarms unter den Baumstumpf geführt und dann nach oben bewegt mit der Folge, dass der Baumstumpf herausgerissen wird.

Diese Lösung hat den Nachteil, dass sehr schwere Bagger eingesetzt werden müssen, weil die Kräfte sehr hoch sind, die benötigt werden, um einen Baumstumpf herauszureißen. Zur Vermeidung dieses Nachteils wird in der P 19 40 446 vorgeschlagen, dass der Reißzahn drehend unter den Baumstumpf geschoben wird, bis sich der Baggerarm auf den Boden aufstützt und der Baumstumpf dann durch die weitere Drehung des Reißzahns aus dem Erdreich herausgerissen wird. Durchgesetzt hat sich diese Lösung nicht.

Eine andere Lösung ist in der DD 242 161 offenbart: Es ist eine Vorrichtung zum Spalten von Baumstümpfen mit zwei Schneideelementen vergleichbar einer Zange oder einer Schere. Die beiden Elemente umfassen den Baumstumpf, schließen sich und zerschneiden- spalten - den Baumstumpf auf diese Weise. Nachteilig ist, dass die Kräfte, die zum Spaltvorgang benötigt werden, über eine hydraulische Mechanik aufgebracht werden müssen, die sehr aufwendig angelegt sein muss, da diese Kräfte sehr hoch sind.

Stand der Technik sind auch Rodungsmesser zur schichtweisen Abtragung von Baumstrünken. Alle haben den Nachteil, dass sie nicht ohne Weiteres mit Baggern eingesetzt werden können. Teilweise, so in EP 0 161 169 ist eine besondere Befestigungsvorrichtung für Bagger vorgesehen, deren Gegenstück eine Spezialanfertigung voraussetzt. Teilweise, so in US 2, 934, 108 wird das Rodungsmesser mit einer eigens dafür konstruierten Spezialmechanik bewegt. Teilweise, so in F 2 615 354 bleibt auch offen, wie das Rodungsmesser eingesetzt wird.

Nach US 2006/0248754 ist das Rodungsmesser an der Baggerschaufel befestigt mit der Folge, dass es nur so weit in den Baumstrunk hineingeführt werden kann, bis die Baggerschaufel am Baumstrunk anschlägt. Dicke Baumstrünke können so nicht von einer Seite aus vollständig bearbeitet werden. Denselben Nachteil hat die Lösung nach US 4,164,247 dadurch, dass der Arbeitsweg des Rodungsmessers durch die quer gestellte Rückplatte begrenzt ist, die zur Befestigung dient.

In den Druckschriften EP 0 161 169, F 2 615 354 sind die wirksamen Klingen der Rodungsmesser in Sägezähne aufgelöst, um auf diese Weise die hohen Druckkräfte auf die einzelnen Sägezähne zu verteilen, was aber nur zu Beginn des jeweiligen Arbeitsvorgangs wirksam ist und dann nicht mehr, wenn sämtliche Sägezähne des Rodungsmessers in den Baumstrunk eingedrungen sind.

In EP 0 161 169, EP 0 314 591, US 4,164,247 und F 2 615 354 ist nur ein waagerechtes Rodungsmesser wirksam mit der Folge, dass der Baumstrunk nur in horizontalen Schichten abgetragen werden kann. Die Nachbearbeitung der Wurzeln, die aus dem Baumstrunk etwa in waagerechter Richtung austreten, ist nicht mehr möglich. Auch können die Reste bereits weitgehend abgetragener Baumstrünke mit solchen Rodungsmessern nicht aus dem Boden entfernt werden.

Aufgabe der Erfindung sind preisgünstiges Gerät und Verfahren zur Beseitigung auch von tiefgehenden Wurzelstöcken in der Weise, dass die Holzteile weitgehend unvermengt mit Erdreich abgeräumt werden können. Die Aufgabe wird so gelöst:
Handelsübliches Zubehör für Bagger sind Schweißadapter. Es sind Platten, die auf der Oberseite mit einer Befestigungsvorrichtung für den Arm des Baggers versehen sind. Dieser hakt und rastet in diese Befestigungsvorrichtung von oben ein. An die Unterseite der Platte können beliebige Vorrichtungen angeschweißt werden, die dann mit dem Bagger bewegt werden.

Nach der Erfindung ist an der Unterseite der Schweißplatte (1) ein Haken, der zumindest auf einer Seite quer zur Hakenebene so verjüngt wird, dass eine scharfe Kante - nachfolgend: Messerkante (4) - entsteht.

Ein solcher Haken ist aus Platten hergestellt. An der Unterseite der Schweißplatte wird eine Platte mit einer ihrer Kanten so befestigt, dass sie von der Schweißplatte nach unten absteht - nachfolgend: Stichplatte (2). An der von der Schweißplatte abgewandten Kante (6) der Stichplatte wird eine weitere Platte in der Weise befestigt, dass ihre Fläche quer zur Fläche der Stichplatte steht - nachfolgend: Schürfplatte (3). Von den beiden anderen Kanten von Stichplatte und Schürfplatte wird mindestens jeweils eine zur Messerkante (4) verjüngt, wobei die Verjüngung zweckmäßig in der Weise erreicht wird, dass eine der Begrenzungsebenen der Platten unverändert bleibt und die andere zur Messerkante hin abgeschrägt wird.

Damit können mit einem Bagger Wurzelstöcke in der Weise entfernt werden, dass das Holz des Stumpfes mit den etwa senkrecht laufenden Fasern mit der Stichplatte (2) gespalten bzw. abgeschabt und zugleich die stammnahen Wurzelteile, ebenfalls etwa entlang ihrer Fasern von der Schürfplatte (3) abgeschabt bzw. gespalten werden.

Zweckmäßig wird die Stichplatte (2) so auf der Schweißplatte (1) angeordnet, dass ihre Fläche in der Ebene liegt, in der sich der Baggerarm bewegt. Dies mit der Folge, dass die Messerkante (4) in diese Richtung zeigt.

Zweckmäßig ist auch ein Anstellwinkel in der Größenordnung von 5°, der das Eindringen der Stichplatte in den Stammteil des Wurzelstockes erleichtert. Zweckmäßig ist es, der Messerkante der Stichplatte einen Anstellwinkel zu geben, ähnlich dem Messer in einem Hobel. Dieser Winkel, um den die Ebene, auf der der Baggerarm seine Bewegungen ausführt, gegenüber einer der beiden Ebenen geneigt ist, die die Messerkante bilden, darf allerdings nicht größer sein als 5°. Dieser Anstellwinkel erleichtert noch das Eindringen der Stichplatte in den Stammteil des Wurzelstocks. Ist der Winkel größer, dann wird dies nicht erleichtert sondern erschwert.

Zweckmäßig steht die Stichplatte (2) senkrecht auf der Schweißplatte (1) und die Schürfplatte (3) senkrecht auf der Stichplatte.

Für die Brauchbarkeit des Geräts ist ein exakter rechter Winkel aber nicht Voraussetzung. Besonders vorteilhaft ist zwischen Stichplatte (2) und Schweißplatte (1) ein rechter Winkel und zwischen Stichplatte (2) und Schürfplatte (3) ein Winkel (α), der um höchstens etwa 10° vom rechten Winkel in der Weise abweicht, dass Stichplatte und Schürfplatte nach Art eines offenen Hakens einander zugeordnet sind. Diese Anordnung verbessert die Funktionstauglichkeit des Geräts bei folgender Anwendung: Ist ein Wurzelstock bereits weitgehend abgearbeitet und die Wurzeln sind am Rand der beabsichtigten Aushubgrube abgeschnitten, dann kann mit dem Bagger unter den auf diese Weise weitgehend schon vom Erdreich gelösten Wurzelstock gefahren werden und dieser kann mit dem "Haken", den Stichplatte und Schürfplatte bilden, insgesamt ausgehoben werden.

Bei dieser Anordnung ist es zweckmäßig, dass der Schwerpunkt der Schürfplatte dann, wenn deren Fläche eben ist, senkrecht unter dem Schwerpunkt des gesamten Geräts liegt. Damit wird der sichere Stand des gesamten Geräts auf der Schürfplatte ermöglicht, was wiederum ein unkompliziertes Greifen und Zusammenrasten der Befestigungselemente der Schweißplatte mit dem Baggerarm ermöglicht.

Ist nur jeweils eine Kante von Stichplatte und Schürfplatte als Messerkante ausgebildet, dann ist es zweckmäßig, dass diese zum Bagger hin zeigt. Damit wird die Möglichkeit geschaffen, dass der Arm des Baggers wie beim Schaufelbagger bewegt werden kann: Er beginnt den Arbeitszyklus gestreckt, bewegt sich kreisförmig nach unten und setzt diese Bewegung zurück zum Bagger hin fort, wobei die Messerkanten das Material des Wurzelstockes spalten bzw. schneiden.

Besonders vorteilhaft ist die Zuordnung von Schürfplatte (3) zur Stichplatte (2) in der Weise, dass die Messerkante (4) der Schürfplatte über die Messerkante der Stichplatte vorsteht. (7) Diese Anordnung bewirkt, dass beide Kanten nicht wie eine einheitliche Kante auf den Wurzelstock auftreffen mit der Folge, dass der Bagger dann sofort einen großen Widerstand überwinden muss. Vielmehr gräbt sich dann die Messerkante der Schürfplatte zuerst in den Wurzelstock ein und danach die Messerkante der Stichplatte.

Der Winkel (β) zwischen Messerkante der Schürfplatte und der Ebene der Stichplatte weicht vom rechten Winkel ab. Dies hat die Folge, dass dann, wenn das Gerät in der Ebene der Stichplatte Richtung Wurzelstock bewegt wird, die Messerkante der Schürfplatte dann, wenn sie auf den Wurzelstock trifft, nicht sofort in ihrer ganzen Länge etwa gleichzeitig auf den Wurzelstock trifft sondern schräg mit der Folge eines ziehenden Schnittes, der die Kraft des Baggers besonders günstig umsetzt.

Zur Optimierung der Messerkante sind zwei Anforderungen zu beachten, die zu gegensätzlichen Ausbildungen führen. Je spitzer der Winkel (γ) zwischen den beiden Ebenen ist, die die Messerkante bilden, desto besser schneidet sie und desto anfälliger ist sie gegen Beschädigungen. Je stumpfer dieser Winkel (γ) ist, desto schlechter schneidet sie und desto robuster ist sie, was Beschädigungen anlangt. Nach der Erfindung wird vorgeschlagen, den Winkel (γ) nicht spitzer als 25° und nicht stumpfer als 35° festzulegen.

Damit wird zugleich eine gute Dimensionierung der "Nase" (7) erreicht, die die Messerkante der Schürfplatte dort bildet, wo sie auf die Messerkante der Stichplatte trifft, sofern die nach Anspruch 4 vorgeschlagene Ausführung gewählt wird. Da dort die Kräfte des Baggers punktförmig auf das Material des Wurzelstocks wirken, entstehen dort sehr hohe Drücke, die das darauf folgende Spalten bzw. Schälen bzw. Abschaben gut einleiten.

Wird der Haken mit Stichplatte und Schweißplatte gebildet, dann soll er einerseits so groß dimensioniert sein, dass ein effizientes Arbeiten möglich ist. Andererseits aus demselben Grund nicht zu groß. Vorgeschlagen wird folgende Dimensionierung:
Für die Messerkante (4) der Stichplatte (2) wird eine Länge zwischen 20 cm und 40 cm vorgeschlagen. Für die Messerkante (4) der Schürfplatte (3) eine Länge zwischen 5 cm und 15 cm. Die Kante, die Stichplatte und Schürfplatte bilden, hat zweckmäßig eine Länge zwischen 20 cm und 30 cm.

Wird der Haken nach der Erfindung mit Stichplatte und Schweißplatte ausgeführt, dann in der Regel in der Weise, dass die Platten aneinandergeschweißt werden. Die hohen Kräfte, die auftreten, beanspruchen Schweißnähte so erheblich, dass sie reißen können. Nach der Erfindung wird vorgeschlagen, dass diese Stellen (5), (6) verstärkt werden. Entweder damit, dass die Schweißnähte selbst verstärkt werden. Oder damit, dass Metallstäbe, beispielsweise Winkelleisten, eingeschweißt werden. Immer mit dem Ergebnis, dass Schweißplatte (1) und Schürfplatte (3) dort dicker sind als im übrigen Bereich der Platten.

Als Material für Stichplatte (2) und Schürfplatte (3) wird zweckmäßig Stahl mit den Eigenschaften vorgeschlagen, die Hardox 500 aufweist.

Die Verbindung zwischen Schweißplatte (1) und Stichplatte (2) einerseits, Stichplatte (2) und Schürfplatte (3) andererseits kann so hergestellt werden, dass die Platten stumpf aneinander stoßen und die Schweißnähte in die Winkel gelegt werden, die die Platten miteinander bilden. Als stabilere Verbindung werden Nuten in der Schweißplatte (1) einerseits, der Schürfplatte (3) andererseits vorgeschlagen, in die die Ränder der Stichplatte (2) vor dem Verschweißen eingefügt werden. Diese Verbindung trägt so viel zur Stabilität bei, dass die Schweißnähte weniger aufwendig sein müssen.

Erfindungsgemäß ist der Winkel, den die Messerkante (4) der Schürfplatte (3) zur Ebene der Stichplatte (2) bildet, kleiner ist als 90°. Als weitere Verbesserung wird vorgeschlagen, dass die Richtung der Messerkante (4) im Bereich der Stichplatte (2) zu dieser noch in einem Winkel von 90° steht, dann aber knickt mit der Folge, dass im weiteren Verlauf der Winkel kleiner ist als 90°. Mit dieser Ausführung wird dem Umstand Rechnung getragen, dass infolge der asymmetrischen Zuordnung der Schürfplatte (3) zur Stichplatte (2) die Widerstandskräfte des Baumstrunks, die auf die Messerkante (4) wirken, ein Drehmoment bewirken. Dieses Drehmoment ist umso größer, je weiter die Widerstandskraft von der Stichplatte (2) entfernt ist. Wird in diesem Bereich die Messerkante (4) nach hinten abgeschrägt, dann führt dies dort zu einer Verringerung der Widerstandskräfte und somit zu einer Verringerung des Drehmoments.

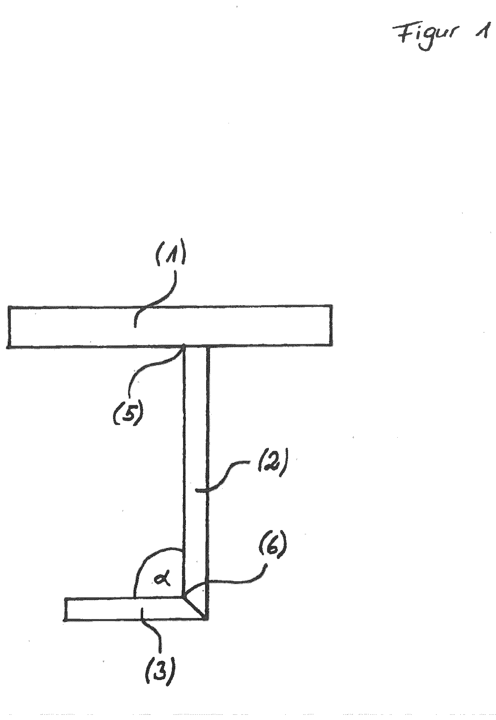

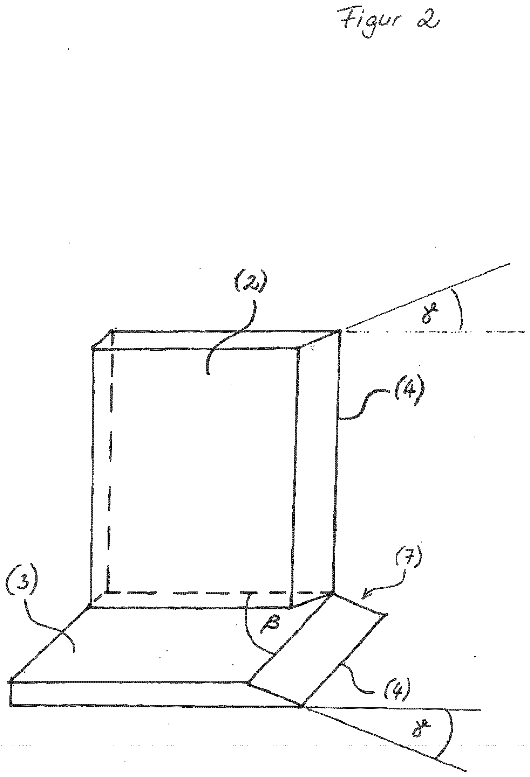

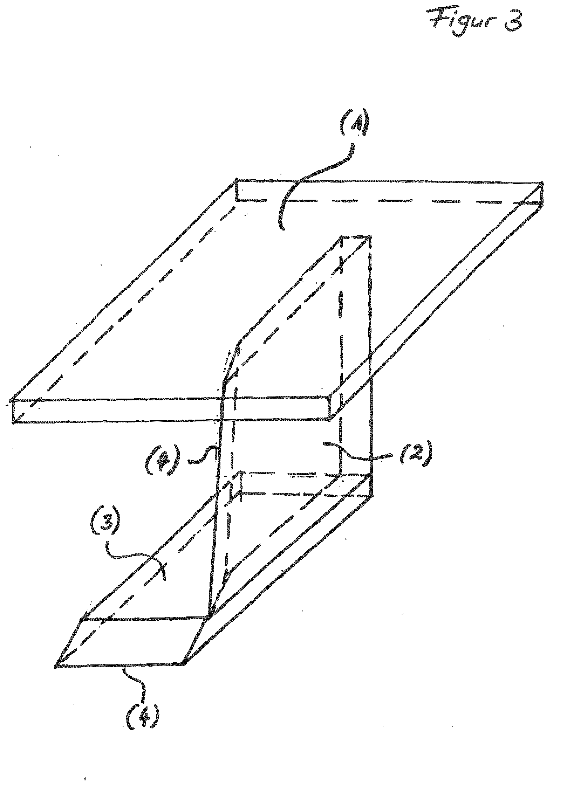

## Patentansprüche

1. Schweißadapter mit Rodungsmesser für Bagger mit einer Befestigungsvorrichtung für den Arm des Baggers an der Oberseite einer Schweißplatte (1), wobei das Rodungsmesser als Haken ausgebildet ist, der aus einem von der Unterseite der Schweißplatte (1) nach unten abstehenden Teil (2) und einem quer zu diesem verlaufenden Teil (3) besteht und der zumindest auf einer Seite über seine ganze Länge quer zur Hakenebene zu einer scharfen Messerkante (4) verjüngt ist, und wobei der Haken aus zwei Platten (2, 3) gebildet ist, von denen eine als Stichplatte bezeichnete Platte (2), die den nach unten abstehenden Teil bildet, mit einer Kante an der Unterseite der Schweißplatte (1) befestigt ist und eine als Schürfplatte bezeichnete Platte (3), die den quer zu dem nach unten abstehenden Teil verlaufenden Teil bildet, an der Unterkante der Stichplatte (2) quer zu dieser befestigt ist, wobei jeweils zumindest eine Kante von Stichplatte und Schürfplatte auf derselben Seite ganz zur Messerkante (4) verjüngt sind, **dadurch gekennzeichnet, dass** die Messerkante (4) der Schürfplatte (3) und die Linie, auf der die Schürfplatte (3) und Stichplatte (2) aneinander stoßen, Schenkel eines Winkels (β) sind, der kleiner als 90° ist.

2. Schweißadapter nach Anspruch 1, **dadurch gekennzeichnet, dass** die Stichplatte (2) senkrecht auf der Schweißplatte (1) angeordnet ist, und die Schürfplatte (3) senkrecht auf der Stichplatte (2) angeordnet ist.

3. Schweißadapter nach Anspruch 1, **dadurch gekennzeichnet, dass** der Winkel (α) zwischen Stichplatte (2) und Schürfplatte (3) kleiner ist als 90° und größer als 80°.

4. Schweißadapter nach einem der Ansprüche 1 bis 3, **dadurch gekennzeichnet, dass** die Messerkante (4) der Schürfplatte (3) über die Messerkante (4) der Stichplatte (2) vorsteht (7).

5. Schweißadapter nach einem der Ansprüche 1 bis 4, **dadurch gekennzeichnet, dass** der Winkel (γ) zwischen den beiden Flächen, die die Messerkante (4) begrenzen, größer ist als 25° und kleiner als 35°.

6. Schweißadapter nach einem der Ansprüche 1 bis 5, **dadurch gekennzeichnet, dass** die Messerkante (4) der Stichplatte (2) eine Länge zwischen 20 cm und 40 cm hat und/oder die Messerkante (4) der Schürfplatte (3) eine Länge zwischen 5 cm und 15 cm oder die Kante, die Stichplatte (2) und Schürfplatte (3) bilden, eine Länge zwischen 20 cm und 30 cm.

7. Schweißadapter nach einem der Ansprüche 1 bis 6, **dadurch gekennzeichnet, dass** jeweils zumindest eine Innenkante (6) zwischen Stichplatte (2) und Schürfplatte (3) oder eine Innenkante (5) zwischen Stichplatte (2) und Schweißplatte (1) in der Weise verstärkt ist, dass dort die jeweilige Materialstärke größer ist als im übrigen Bereich der Platten.

8. Schweißadapter nach einem der Ansprüche 1 bis 7, **dadurch gekennzeichnet, dass** die Ränder der Stichplatte (2) in Nuten der Schweißplatte (1) einerseits, der Schürfplatte (3) andererseits eingetieft sind.

9. Schweißadapter nach einem der Ansprüche 1 bis 8, **dadurch gekennzeichnet, dass** die Messerkante (4) der Schürfplatte (3) in der Weise abgewinkelt ist, dass sie von der Stichplatte (2) zunächst im Winkel von 90° wegläuft und dann so abknickt, dass ihr Winkel zur Stichplatte (2) kleiner wird als 90°.

10. Verfahren zur Beseitigung von Wurzelstöcken mittels einer Vorrichtung nach einem der Ansprüche 1 bis 9, **dadurch gekennzeichnet, dass** das als Haken ausgebildete Rodungsmesser wiederholt an Stumpf und Wurzeln so entlang geführt wird, dass dieses das Material von Stumpf und Wurzeln schichtweise abtrennt oder spaltet.

## Claims

1. Weld adapter with clearing blade for excavators, with a fastening device for the arm of the excavator at the upper side of a welding plate (1), wherein the clearing blade is configured as a hook consisting of a part (2) protruding downwards from the underside of the welding plate (1) and a part (3) running in a transverse direction to this and which tapers into a sharp cutting edge (4) at at least one side along its entire length in a transverse direction to the plane of the hook, wherein the hook is made up of two plates (2, 3), one of which is a plate (2) which is referred to as a stitch plate and forms the downwardly projecting part and is fastened by one edge to the underside of the welding plate (1), and one of which is a plate (3) which is referred to as a scraping plate (3) and forms the part running in a transverse direction to the part protruding downwards and is attached to the underside of the stitch plate (2) in a transverse direction to it, wherein at least one edge of the stitch plate and one edge of the scraping plate at the same side taper completely into the cutting edge (4), **characterised in that** the cutting edge (4) of the scraping plate (3) and the line at which the scraping plate (3) and stitch plate (2) meet constitute the arms of an angle (β) which is less than 90°.

2. Weld adapter according to claim 1, **characterised in that** the stitch plate (2) is arranged orthogonal to the welding plate (2), and the scraping plate (3) is arranged orthogonal to the stitch plate (2).

3. Weld adapter according to claim 1, **characterised in that** the angle (α) between stitch plate (2) and scraping plate (3) is less than 90° and greater than 80°.

4. Weld adapter according to one of the claims 1 to 3, **characterised in that** the cutting edge (4) of the scraping plate (3) protrudes (7) over the cutting edge (4) of the stitch plate (2).

5. Weld adapter according to one of the claims 1 to 4, **characterised in that** the angle (γ) between the two surfaces bordering the cutting edge (4) is greater than 25° and less than 35°.

6. Weld adapter according to one of the claims 1 to 5, **characterised in that** the cutting edge (4) of the stitch plate (2) is between 20 cm and 40 cm in length and/or the cutting edge (4) of the scraping plate (3) is between 5 cm and 15 cm in length or the edge made up of the stitch plate (2) and the scraping plate (3) is between 20 cm and 30 cm in length.

7. Weld adapter according to one of the claims 1 to 6, **characterised in that** at least one of an inner edge (6) between stitch plate (2) and scraping plate (3) and an inner edge (5) between stitch plate (2) and welding plate (1) is reinforced in such a way that the material thickness there is greater than in the remaining area of the plates.

8. Weld adapter according to one of the claims 1 to 7, **characterised in that** the edges of the stitch plate (2) have been sunk into grooves of the welding plate (1) on the one hand and of the scraping plate (3) on the other.

9. Weld adapter according to one of the claims 1 to 8, **characterised in that** the cutting edge (4) of the scraping plate (3) is angled in such a way that it runs away from the stitch plate (2) at a 90° angle initially and then bends in such a way that its angle to the stitch plate (2) is less than 90°.

10. Procedure to remove tree stumps using a device according to one of the claims 1 to 9, **characterised in that** the hook-shaped clearing blade is repeatedly passed by the stump and roots in such a way that it severs or splits the stump and root material in layers.

## Revendications

1. Adaptateur de soudage avec lame de défrichage pour pelle excavatrice, avec un mécanisme de fixation pour le bras de la pelle excavatrice, sur la face supérieure d'une plaque de soudure (1), la lame de défrichage étant formée en tant que crochet, qui se compose d'une partie (2), qui est éloignée de la face inférieure de la plaque de soudure (1) vers le bas et d'une partie (3), qui évolue transversalement par rapport à celle-ci, et qui est amincie, au moins sur une face, sur toute sa longueur, transversalement par rapport au plan du crochet, en un bord de lame tranchant (4), le crochet étant constitué de deux plaques (2, 3), parmi lesquelles une plaque dite plaque piquée (2), qui constitue la partie s'éloignant vers le bas, est fixée, avec un bord, sur la face inférieure de la plaque de soudure (1) et une plaque dite plaque décapeuse (3), qui constitue la partie évoluant transversalement à la partie s'éloignant vers le bas, est fixée sur le bord inférieur de la plaque piquée (2), transversalement par rapport à celle-ci, au moins un bord de la plaque piquée et de la plaque décapeuse respectivement sont amincies sur la même face en formant le bord de lame (4), **caractérisé en ce que** le bord de lame (4) de la plaque décapeuse (3) et la ligne, sur laquelle la plaque décapeuse (3) et la plaque piquée (2) se mettent à bout l'une par rapport à l'autre, forment les côtés d'un angle (β), qui est inférieur à 90°.

2. Adaptateur de soudage suivant la revendication 1, **caractérisé en ce que** la plaque piquée (2) est agencée perpendiculairement sur la plaque de soudure (1) et que la plaque décapeuse (3) est agencée perpendiculairement sur la plaque piquée (2).

3. Adaptateur de soudage suivant la revendication 1, **caractérisé en ce que** l'angle (α) entre la plaque piquée (2) et la plaque décapeuse (3) est inférieur à 90° et supérieur à 80°.

4. Adaptateur de soudage suivant l'une des revendications 1 à 3, **caractérisé en ce que** le bord de lame (4) de la plaque décapeuse (3) dépasse (7) au-delà du bord de lame (4) de la plaque piquée (2).

5. Adaptateur de soudage suivant l'une des revendications 1 à 4, **caractérisé en ce que** l'angle (γ) entre les deux surfaces qui délimitent le bord de lame (4), est supérieur à 25° et inférieur à 35°.

6. Adaptateur de soudage suivant l'une des revendications 1 à 5, **caractérisé en ce que** le bord de lame (4) de la plaque piquée (2) a une longueur entre 20 cm et 40 cm et / ou que le bord de lame (4) de la plaque décapeuse (3) a une longueur entre 5 cm et 15 cm, ou **en ce que** le bord, que forment la plaque piquée (2) et la plaque décapeuse (3), a une longueur entre 20 cm et 30 cm.

7. Adaptateur de soudage suivant l'une des revendications 1 à 6, **caractérisé en ce qu'**au moins un bord intérieur (6) entre la plaque piquée (2) et la plaque décapeuse (3) ou un bord intérieur (5) entre la plaque piquée (2) et la plaque de soudure (1) respectivement est renforcé de manière que l'épaisseur respective de matériau y soit plus grande que dans le reste du secteur des plaques.

8. Adaptateur de soudage suivant l'une des revendications 1 à 7, **caractérisé en ce que** les bordures de la plaque piquée (2) sont enfoncées dans des rainures de la plaque de soudure (1) d'une part, de la plaque décapeuse (3) d'autre part.

9. Adaptateur de soudage suivant l'une des revendications 1 à 8, **caractérisé en ce que** le bord de lame (4) de la plaque décapeuse (3) est coudé de manière qu'il s'écarte de la plaque piquée (2) tout d'abord suivant un angle de 90° et se courbe, ensuite, de sorte que son angle, par rapport à la plaque piquée (2), est inférieur à 90°.

10. Procédé, destiné à éliminer des souches au moyen d'un mécanisme suivant l'une des revendications 1 à 9, **caractérisé en ce que** la lame de défrichage, formée en tant que crochet, est guidée de manière répétée le long de la base du tronc et des racines, de sorte que celle-ci détache ou fend par couches le matériau de la base du tronc et des racines.
